# EUROPEAN PATENT APPLICATION

(11) **EP 1 500 965 A1**
(43) Date of publication of application: **26.01.2005**
(21) Application number: 04009602.6
(22) Date of filing: 22.04.2004
(51) Int. Cl.: G02F 1/035, G02F 1/225

(54) **Optical waveguide device with optical modulator and manufacturing method therefor**

(30) Priority: 22.07.2003 JP 2003199712
(71) Applicant: FUJITSU LIMITED, Kawasaki-shi, Kanagawa 211-8588 (JP)
(72) Inventor: Maeda, Akio, Kawasaki-shi Kanagawa 211-8588 (JP)
(74) Representative: HOFFMANN - EITLE

(57) **Abstract**

A manufacturing method for an optical waveguide device (2). The manufacturing method includes the steps of forming a plurality of optical waveguides (8,10,12,14) in a wafer (40) having an electro-optic effect and forming a plurality of signal electrodes (20,22) and a plurality of grounding electrodes (24,26,28) on the wafer (40) in relation to each optical waveguide (8,10,12,14). The manufacturing method further includes the step of forming a dummy electrode (30,32,44) on the wafer (40) so as to surround all of the signal electrodes (20,22) and the grounding electrodes (24,26,28) on the wafer (40) in electrically spaced relationship therewith simultaneously with formation of the signal electrodes (20,22) and the grounding electrodes (24,26,28). Furthermore, a pair of protective members (48,50) is bonded to the wafer (40) so as to abut against the dummy electrode (30,32,44). The wafer (40) is finally diced to separate individual optical waveguide devices (2).

## Description

### BACKGROUND OF THE INVENTION

### Field of the Invention

The present invention relates to an optical waveguide device and a manufacturing method therefor.

### Description of the Related Art

An optical device using an optical waveguide has increased in necessity with the evolution of optical communication, and it is used as an optical modulator, optical demultiplexer, optical switch, or optical wavelength converter, for example. Known examples of the optical waveguide include an optical waveguide formed by diffusing Ti in an LiNbO₃ crystal substrate, an optical waveguide formed by depositing SiO₂ on an Si substrate, and a polymer optical waveguide and so on. As a practical external modulator, a Mach-Zehnder type optical modulator (LN modulator) using a dielectric crystal substrate such as a lithium niobate (LiNbO₃) crystal substrate has been developed. Carrier light having a constant intensity from a light source is supplied to the LN modulator to obtain an optical signal intensity-modulated by a switching operation using the interference of light.

The LN modulator includes a dielectric substrate formed from an X-, Y-, or Z-cut lithium niobate crystal, a pair of optical waveguides formed in the upper surface of the substrate by thermally diffusing titanium (Ti) in the substrate to thereby increase a refractive index, these optical waveguides being combined together near their opposite ends, an SiO₂ buffer layer formed on each optical waveguide, and a signal electrode (traveling wave electrode) and a grounding electrode formed on the buffer layers so as to respectively correspond to these optical waveguides. Signal light input from one end of the combined optical waveguides is split at one junction thereof to propagate in the optical waveguides. When a drive voltage is applied to the signal electrode formed over one or both of the optical waveguides, a phase difference is produced between the split signal lights propagating in the optical waveguides by an electro-optic effect.

In the LN modulator, these signal lights are recombined to be taken out as optical signal outputs. By applying the drive voltage so that the phase difference between the signal lights propagating in the two optical waveguides becomes 0 or π, an on/off pulse signal can be obtained. As a recent LN modulator, the development of a modulator having a high-frequency band of 40 Gb/s has been pursued to realize a higher modulation rate. To this end, a signal electrode in the LN modulator is formed from an Au plating film having a width of about 15µm and a height of about 30µm, thereby ensuring a high-frequency band characteristic.

The main characteristics of the LN modulator include an optical response band characteristic (E/O characteristic) and an electric reflection characteristic (S11 characteristic). When the Au plating thickness is smaller than a certain value, the optical response band characteristic is degraded, whereas when the Au plating thickness is too large, the electric reflection characteristic is degraded. Thus, the optical response band characteristic and the electric reflection characteristic are in trade-off relation, and its tolerance is very narrow, causing a reduction in yield in manufacturing the LN modulator. In response to the requirement for the high-frequency band characteristic, the overall length of the LN modulator tends to be increased and it is difficult to uniform the film thickness of the Au plating as an electrode over the length of the LN modulator. In the case of forming the Au plating functioning as a signal electrode and a grounding electrode on a wafer by applying a prior art method, a current density in electroplating becomes higher at a central portion of the wafer, so that the plating thickness tends to be smaller at the central portion and larger at the peripheral portion of the wafer.

Protective members (LN blocks) for protection of an optical waveguide and handling of an LN chip are fixed by adhesive to the end surfaces (light input and output portions) of the LN modulator. This adhesive is highly reliable, but has a low viscosity. In curing this adhesive, heating (at 65°C for 5 hours or more) is required. In the prior art, this adhesive flows to the electrode surface in curing, causing a change in permittivity of the LN modulator to result in a degradation in electric characteristics. As another problem in manufacturing, the protective members are displaced in bonding to the wafer surface. If the protective members are displaced to the electrodes, the wafer becomes defective as a whole.

### SUMMARY OF THE INVENTION

It is therefore an object of the present invention to provide a manufacturing method for an optical waveguide device which can form plating films for forming signal electrodes and grounding electrodes with a uniform thickness.

It is another object of the present invention to provide a highly reliable optical waveguide device having an excellent high-frequency characteristic.

In accordance with an aspect of the present invention, there is provided a manufacturing method for an optical waveguide device, including the steps of forming a plurality of optical waveguides in a wafer having an electro-optic effect; forming a plurality of signal electrodes and a plurality of grounding electrodes on the wafer in relation to each of the optical waveguides; forming a dummy electrode on the wafer so as to surround all of the signal electrodes and the grounding electrodes on the wafer simultaneously with formation of the signal electrodes and the grounding electrodes; and dicing the wafer to separate individual optical waveguide devices.

Preferably, the manufacturing method for the optical waveguide device further includes the step of bonding a pair of protective members on the wafer outside of the dummy electrode in proximity thereto, before the dicing step. Preferably, the protective members are in abutment against the dummy electrode, and the dummy electrode is rectangular and has area enlarged portions at the four corners. The signal electrodes, the grounding electrodes, and the dummy electrode are formed by electroplating of a material selected from the group consisting of Au, Ag, and Cu. Alternatively, the signal electrodes, the grounding electrodes, and the dummy electrode may be formed by electroless plating of Cu.

In accordance with another aspect of the present invention, there is provided an optical waveguide device including a substrate having an electro-optic effect; an optical waveguide formed in the substrate; a signal electrode formed in relation to the optical waveguide; a grounding electrode formed on the substrate; and a pair of dummy electrodes formed near the opposite ends of the substrate so as to be spaced apart from the signal electrode and the grounding electrode.

Preferably, the substrate includes an LiNbO₃ substrate, and the optical waveguide is formed by thermally diffusing Ti in the LiNbO₃ substrate.

In accordance with a further aspect of the present invention, there is provided an optical modulator including a substrate having an electro-optic effect; an optical waveguide structure having an input waveguide formed in the substrate, an output waveguide formed in the substrate, and first and second waveguides extending between the input waveguide and the output waveguide, the first and second waveguides being connected to the input and output waveguides, respectively; a first signal electrode formed over the first waveguide; a second signal electrode formed over the second waveguide; a grounding electrode formed on the substrate; and a pair of dummy electrodes formed near the opposite ends of the substrate so as to be spaced apart from the first and second signal electrodes and the grounding electrode.

The above and other objects, features and advantages of the present invention and the manner of realizing them will become more apparent, and the invention itself will best be understood from a study of the following description and appended claims with reference to the attached drawings showing some preferred embodiments of the invention.

### BRIEF DESCRIPTION OF THE DRAWINGS

FIG. 1A is a plan view of a Mach-Zehnder type optical modulator according to a preferred embodiment of the present invention;
FIG. 1B is an elevational view of the optical modulator shown in FIG. 1A;
FIG. 2 is a plan view showing the arrangement of a dummy electrode formed on a wafer;
FIGS. 3A to 3N and FIGS. 3P to 3S are schematic views for illustrating the manufacturing method for the optical waveguide device according to the present invention;
FIG. 4 is a plan view of a mask for use in an electrode forming step of the manufacturing method according to the present invention;
FIG. 5 is a plan view showing a wafer dicing step;
FIG. 6 is a graph showing the distribution of plating thickness in the present invention in comparison with the prior art;
FIG. 7 is a graph showing an optical response band characteristic in the present invention in comparison with the prior art; and
FIG. 8 is a graph showing an electric reflection characteristic in the present invention in comparison with the prior art.

### DETAILED DESCRIPTION OF THE PREFERRED EMBODIMENTS

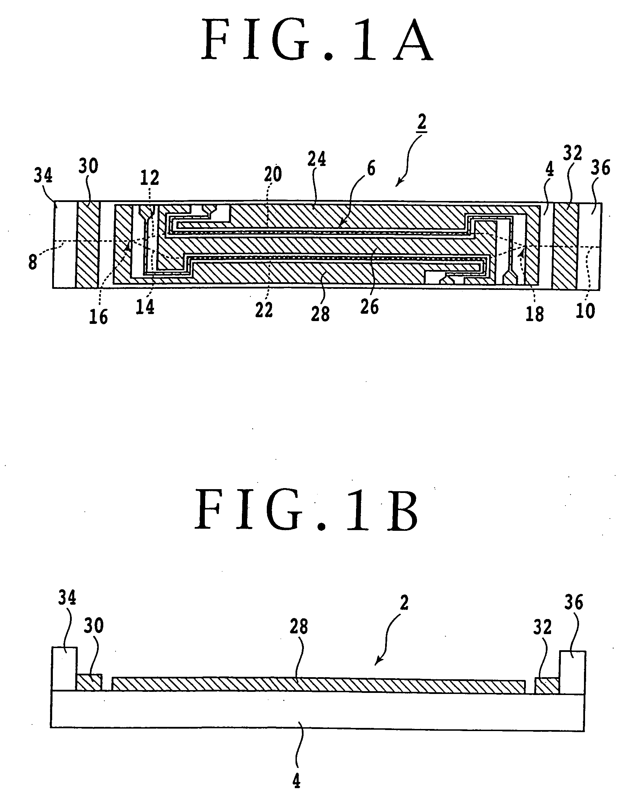

FIG. 1A is a plan view of a Mach-Zehnder type optical modulator 2 manufactured by the manufacturing method according to the present invention, and FIG. 1B is an elevational view of the optical modulator 2 shown in FIG. 1A, wherein the dimensional ratios are exaggerated for illustration. The optical modulator or optical modulator chip 2 is formed of a dielectric having an electro-optic effect. For example, the optical modulator 2 is formed from a lithium niobate substrate (LiNbO₃ substrate) 4. The optical modulator 2 has a Mach-Zehnder type optical waveguide structure 6.

The optical waveguide structure 6 is composed of an input optical waveguide 8, an output optical waveguide 10, and first and second optical waveguides 12 and 14 extending between the input optical waveguide 8 and the output optical waveguide 10. The first and second optical waveguides 12 and 14 are connected through a Y branch 16 to the input optical waveguide 8 and also connected through a Y branch 18 to the output optical waveguide 10. The optical waveguide structure 6 is formed by thermally diffusing titanium (Ti) in the LiNbO₃ substrate 4.

Signal light supplied to the input optical waveguide 8 is substantially equally divided in optical power into two components through the Y branch 16, and these two components are guided by the first and second optical waveguides 12 and 14, respectively. These guided optical components are coupled through the Y branch 18 to the output optical waveguide 10. Switching is made between a coupled mode where light is guided in the output optical waveguide 10 and a radiation mode (leaky mode) where light is radiated from the Y branch 18 into the substrate 4 according to a phase difference of light guided in the first and second optical waveguides 12 and 14.

A first signal electrode (first traveling wave electrode) 20 is provided over the first optical waveguide 12 and a second signal electrode (second traveling wave electrode) 22 is provided over the second optical waveguide 14, so as to change the phase difference between signal lights branched. Further, three grounding electrodes 24, 26, and 28 are formed on the substrate 4 so as to be arranged adjacent to the first and second signal electrodes 20 and 22. Further, dummy electrodes 30 and 32 are formed on the substrate 4 in the vicinity of the opposite ends thereof to exhibit an effect by the use in the manufacturing method according to the present invention. The signal electrodes 20 and 22, the grounding electrodes 24, 26, and 28, and the dummy electrodes 30 and 32 are formed from Au plating. Further, auxiliary appliances (protective members) 34 and 36 for handling the optical modulator 2 are bonded to the substrate 4 in the vicinity of the opposite ends thereof so as to respectively abut against the dummy electrodes 30 and 32.

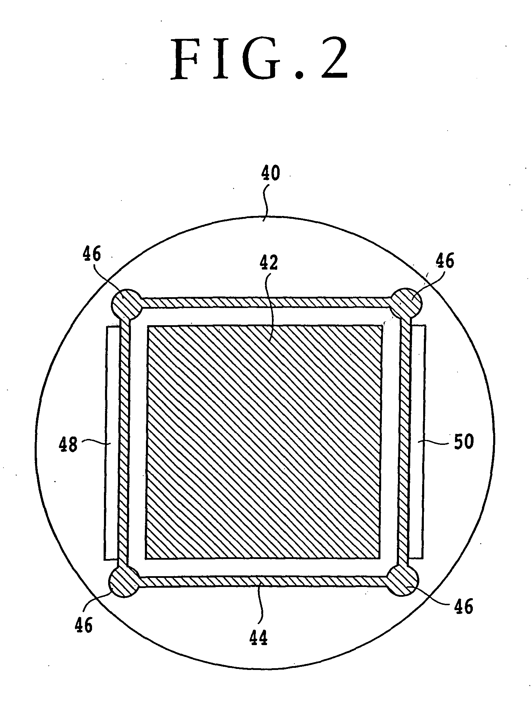

FIG. 2 is a plan view showing the arrangement of a dummy electrode 44 on a wafer 40. The dummy electrode 44 is rectangular so as to surround an LN chip product section 42 in spaced relationship therewith. The dummy electrode 44 has area enlarged portions 46 at the four corners. A pair of auxiliary appliances (protective members) 48 and 50 are bonded to the wafer 40 so as to abut against the dummy electrode 44.

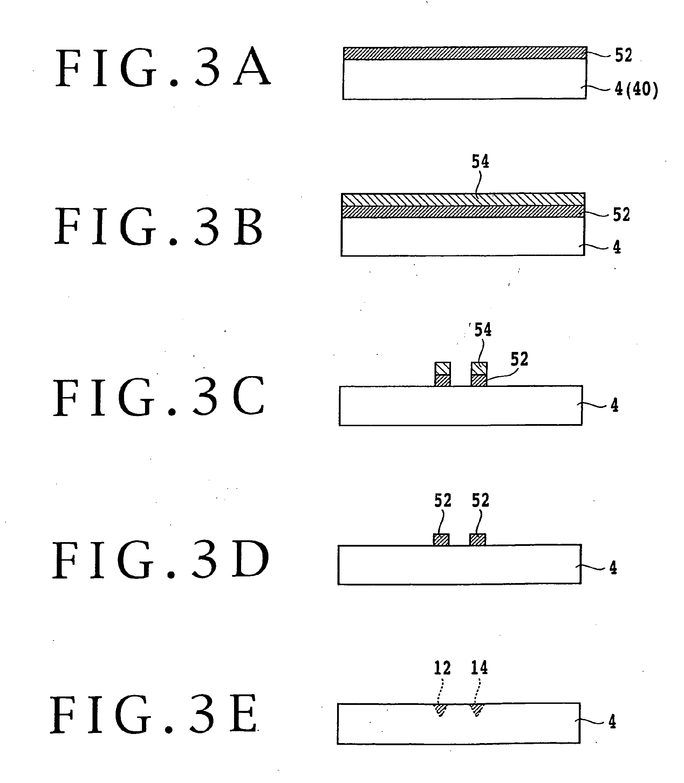

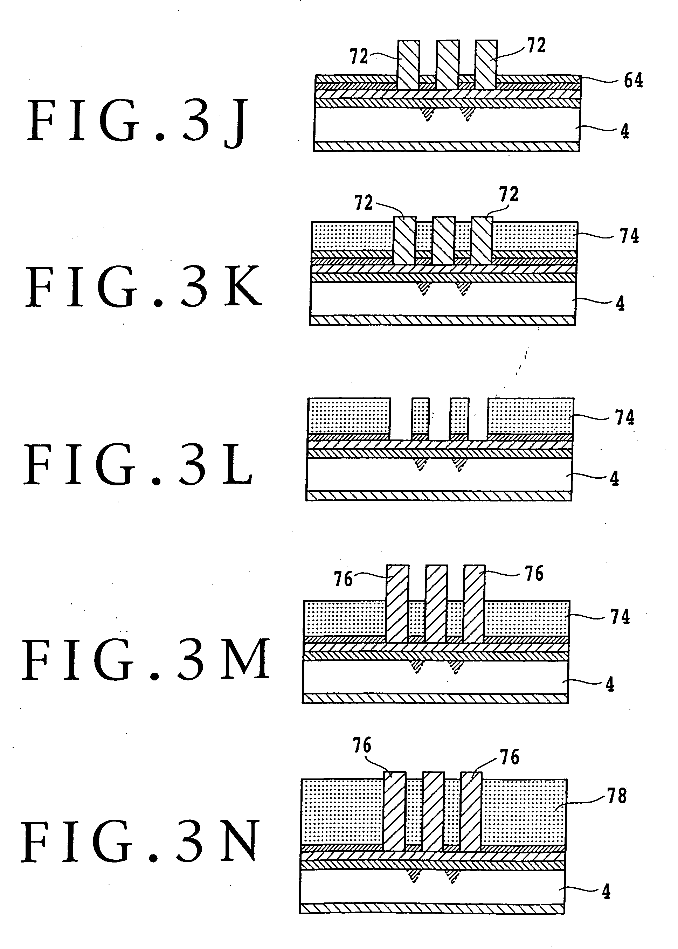

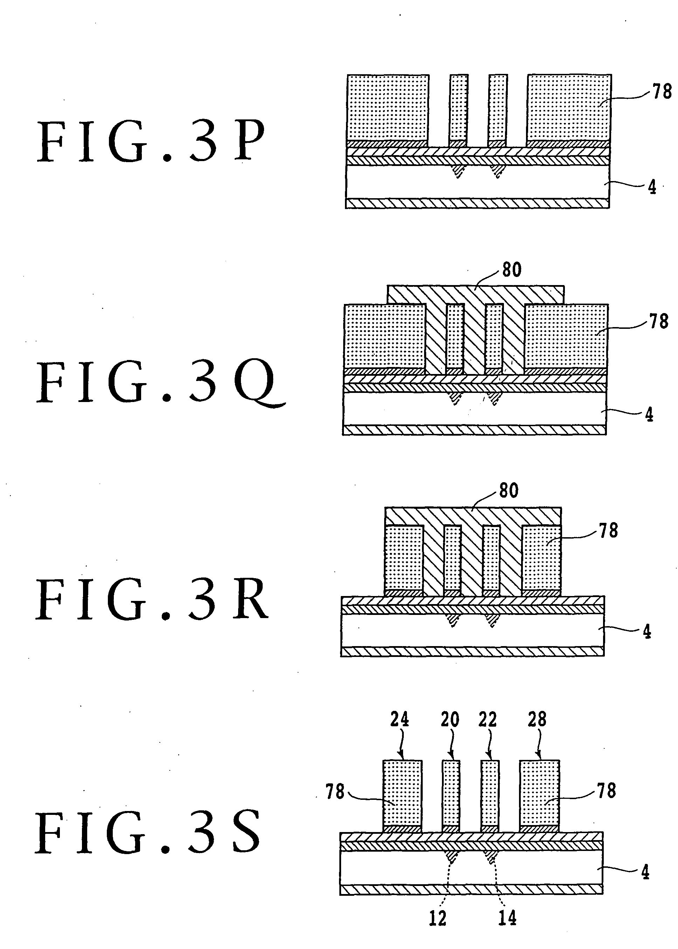

There will now be described a manufacturing method for an optical modulator according to a preferred embodiment of the present invention with reference to FIGS. 3A to 3N and FIGS. 3P to 3S. The present invention is not limited to the manufacturing method for the optical modulator, but it is also applicable to a manufacturing method for any other optical waveguide devices such as an optical demultiplexer, optical switch, and optical wavelength converter. As shown in FIG. 3A, a Ti film 52 having a thickness of about 100 nm is formed by vacuum evaporation on an LiNbO₃ wafer (LN wafer) 40 or on an LiNbO₃ substrate (LN substrate) 4. The Ti film 52 has a purity of 99.99%. While all the processes of the manufacturing method according to this preferred embodiment are actually carried out on the LN wafer 40, optical waveguides are formed on the LN substrate 4 in the following description for the convenience of illustration.

As shown in FIG. 3B, a photoresist 54 having a thickness of about 1µm is applied to the Ti film 52. The photoresist 54 is prebaked, exposed, and developed to a predetermined pattern. Further, the photoresist 54 is postbaked, and the Ti film 52 is wet-etched (FIG. 3C). Thereafter, the photoresist 54 is removed by ultrasonic cleaning with acetone or the like, thereby obtaining a pattern of the Ti film 52 as shown in FIG. 3D. Thereafter, thermal diffusion of the Ti film 52 into the substrate 4 is performed at a temperature of about 1000°C for about 10 hours as passing pure oxygen as a carrier gas at a flow rate of about 10 liters/min, thereby forming optical waveguides 12 and 14 as shown in FIG. 3E.

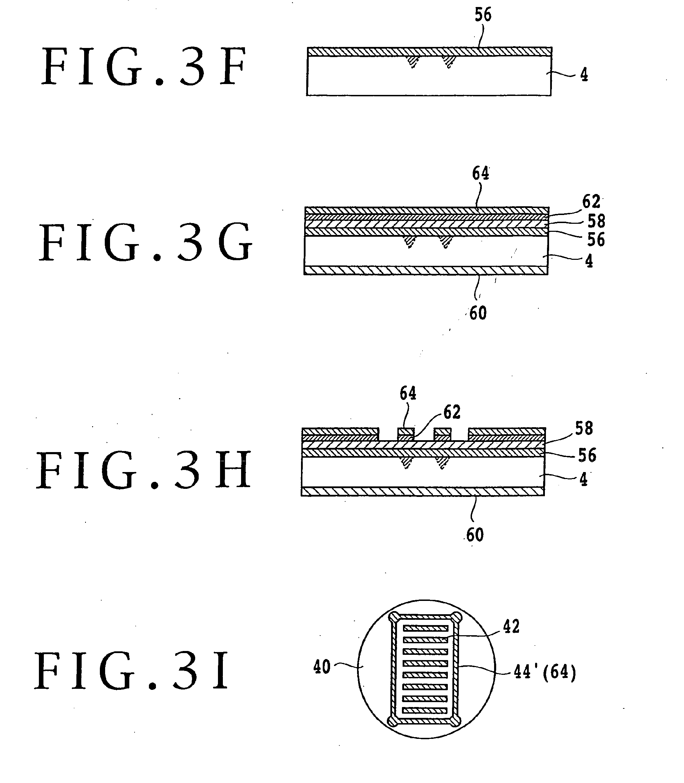

As shown in FIG. 3F, an SiO₂ buffer layer 56 having a thickness of about 1µm is next formed. As shown in FIG. 3G, Si films 58 and 60 each having a thickness of about 0.1µm are formed on the SiO₂ buffer layer 56 and on the lower surface of the substrate 4, respectively. The deposition of these Si films 58 and 60 is performed by a DC sputter device using Ar as a carrier gas at a deposition pressure of 0.66 Pa. Thereafter, a Ti film 62 having a thickness of about 50 nm and an Au film 64 having a thickness of about 200 nm are sequentially formed by vacuum evaporation under a vacuum of 6.6 × 10⁻⁴ Pa as shown in FIG. 3G. The Ti film 62 has a purity of 99.99%, and the Au film 64 has a purity of 99.99% or more. Thereafter, a photoresist is applied to the Au film 64, and then patterned so that signal electrodes, grounding electrodes, and a dummy electrode are left.

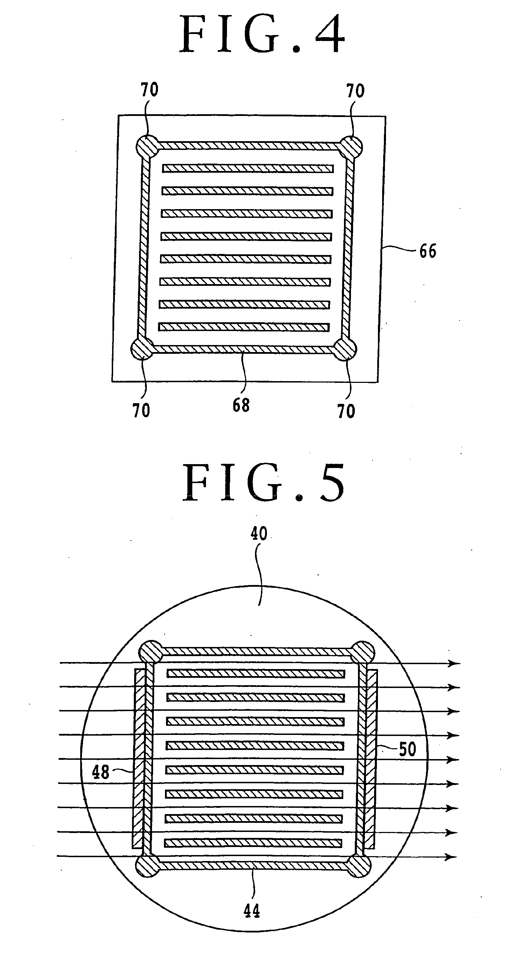

FIG. 4 shows the shape of a mask 66 used in patterning this photoresist. The mask 66 has a rectangular light transmitting portion 68 for forming the dummy electrode 44. The rectangular light transmitting portion 68 has four corners 70 enlarged in area. The reason for formation of such area enlarged portions 70 is to suppress the tendency of concentrated flow of a current at the four corners of the LN chip product section 42 in plating Au, resulting in an increase in plating thickness. The size of each corner 70 is preferably as large as possible, depending on the number of LN chips.

As shown in FIG. 3H, the Ti film 62 and the Au film 64 are etched by using an etching liquid. The sectional structure of FIG. 3H corresponds to FIG. 3I showing a plan view of the wafer 40 wherein a dummy electrode base 44' is formed from the Au film 64 so as to surround the LN chip product section 42. Thereafter, a photoresist 72 having a thickness of about 13µm is applied for formation of a first Au plating 74 (FIG. 3K), and then patterned as shown in FIG. 3J. As shown in FIG. 3K, the first Au plating 74 having a thickness of about 4µm is formed, and the photoresist 72 is next removed by ultrasonic cleaning with acetone or the like (FIG. 3L).

Further, a photoresist 76 having a thickness of about 13µm is applied for formation of a second Au plating 78 (FIG. 3N), and then patterned as shown in FIG. 3M. As shown in FIG. 3N, the second Au plating 78 having a thickness of about 14µm (the total thickness of the Au plating = 18µm) is formed, and the photoresist 76 is next removed by ultrasonic cleaning with acetone or the like to obtain the condition shown in FIG. 3P. Thereafter, a photoresist 80 for etching of an unwanted portion of the Ti film 62 and the Au film 78 is applied with a thickness of about 14.5µm, and next patterned as shown in FIG. 3Q. Then, the unwanted portion of the Ti film 62 and the Au film 78 is removed by wet etching as shown in FIG. 3R, and the photoresist 80 is next removed by ultrasonic cleaning with acetone or the like (FIG. 35). As a result, given electrode shapes 20, 22, 24, 28, and 44 can be obtained.

The above steps are carried out to thereby allow the formation of a plurality of optical modulators 2 on the LN wafer 40. In this condition, the tests on optical response band characteristic and electric reflection characteristic are carried out. In the next step, a pair of protective members (auxiliary appliances) 48 and 50 are bonded to the LN wafer 40 at positions near the opposite ends of the plural optical modulators 2 or the LN chip product section 42 formed on the LN wafer 40 so as to abut against the dummy electrode 44 as shown in FIG. 2. These protective members 48 and 50 serve to protect the end surfaces of each optical modulator 2.

Thereafter, dicing by a rotary resin diamond blade is performed to individually cut the optical modulator chips 2 from the LN wafer 40 as shown in FIG. 5. An Si film is formed on the side surfaces of each optical modulator chip 2 to electrically connect the Si films 58 and 60 formed on the upper and lower surfaces of the substrate 4 in the step of FIG. 3G. Finally, an antireflection film is formed by vacuum evaporation on the end surfaces of each optical modulator chip 2, thus completing each optical modulator chip 2.

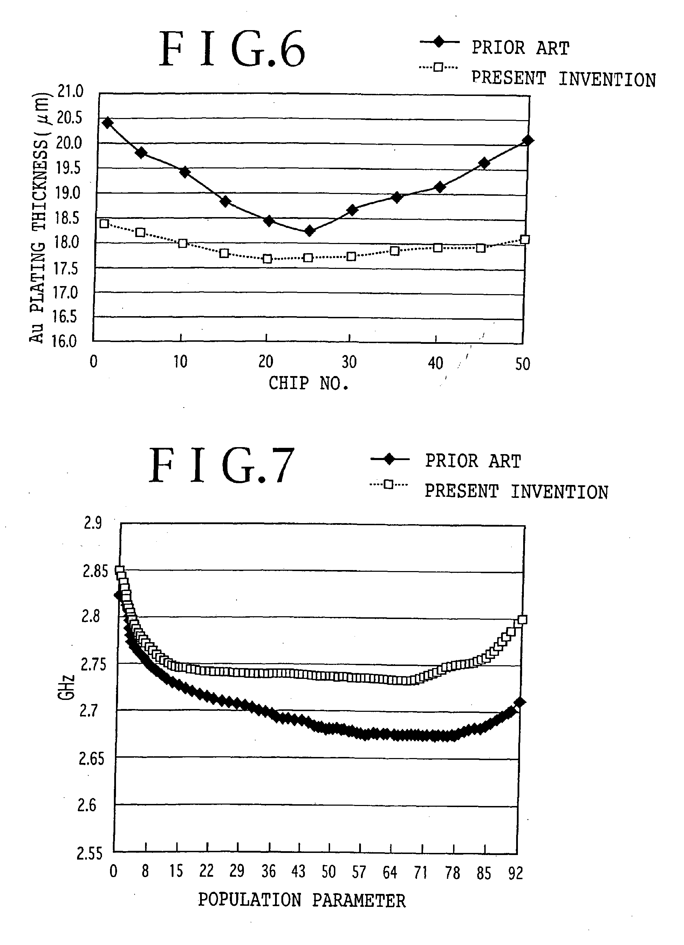

Table 1 shows a comparison of the distribution of Au plating thickness between the prior art and the present invention, and FIG. 6 shows a graph corresponding to Table 1.

**Table 1:**

| Unit : µm | | | | | | | | | | |
|---|---|---|---|---|---|---|---|---|---|---|
| | Prior art | | | | | Present invention | | | | |
| Measurement position (chip No.) | A | B | C | D | Average | A | B | C | D | Average |
| 1 | 21.0 | 20.2 | 19.6 | 20.8 | 20.4 | 18.5 | 18.5 | 18.1 | 18.3 | 18.4 |
| 5 | 20.4 | 19.5 | 19.0 | 20.3 | 19.8 | 18.3 | 18.3 | 17.9 | 18.2 | 18.2 |
| 10 | 19.7 | 19.4 | 18.6 | 19.8 | 19.4 | 18.1 | 18.1 | 17.8 | 17.9 | 18.0 |
| 15 | 19.2 | 18.7 | 18.1 | 19.2 | 18.8 | 17.8 | 17.7 | 17.8 | 17.7 | 17.8 |
| 20 | 19.0 | 18.0 | 17.6 | 19.1 | 18.4 | 17.7 | 17.5 | 17.8 | 17.6 | 17.7 |
| 25 | 18.8 | 17.8 | 17.2 | 19.0 | 18.2 | 17.8 | 17.5 | 17.7 | 17.7 | 17.7 |
| 30 | 19.2 | 18.1 | 18.1 | 19.1 | 18.6 | 18.0 | 17.5 | 17.7 | 17.7 | 17.7 |
| 35 | 19.4 | 18.6 | 18.4 | 19.2 | 18.9 | 18.1 | 17.5 | 17.7 | 18.0 | 17.8 |
| 40 | 20.0 | 18.5 | 18.5 | 19.5 | 19.1 | 18.3 | 17.5 | 17.7 | 18.1 | 17.9 |
| 45 | 20.3 | 19.1 | 18.9 | 20.1 | 19.6 | 18.3 | 17.5 | 17.7 | 18.1 | 17.9 |
| 50 | 20.8 | 19.6 | 19.2 | 20.6 | 20.1 | 18.6 | 17.5 | 17.7 | 18.5 | 18.1 |
| Max | 21.0 | | | | | 18.6 | | | | |
| Min | 17.2 | | | | | 17.5 | | | | |
| Central value: (Max-Min)/2 | 19.1 | | | | | 18.1 | | | | |
| Distribution (±%) | 9.9 | | | | | 3.0 | | | | |

As apparent from Table 1 and FIG. 6, the distribution of Au plating thickness in the present invention is much smaller than that in the prior art. That is, the film thickness distribution in the prior art is ±9.9%, whereas the film thickness distribution in the present invention is improved to ±3.0%. This result is considered to be due to the fact that the dummy electrode 44 can suppress an increase in current density in plating the Au film.

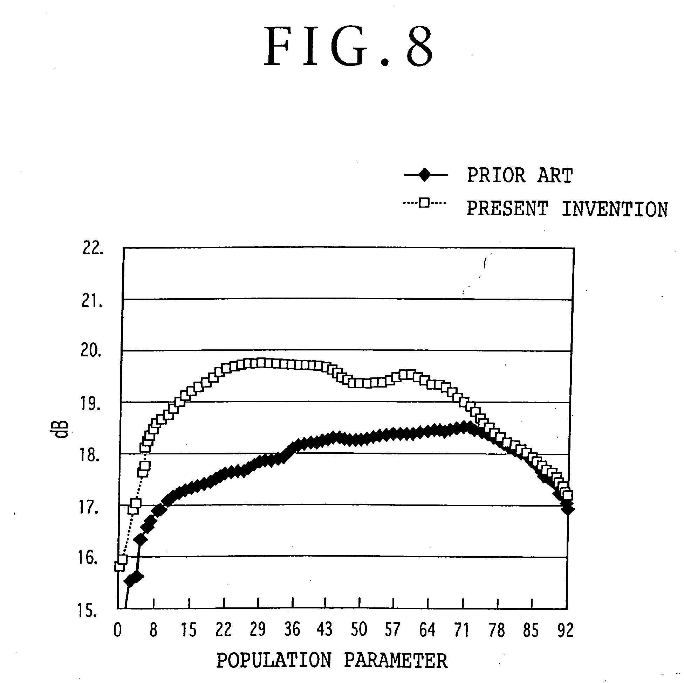

FIG. 7 shows an optical response band characteristic according to the present invention in comparison with the prior art, and FIG. 8 shows an electric reflection characteristic (mismatching attenuation) according to the present invention in comparison with the prior art. In the optical response band characteristic in the prior art shown in FIG. 7, the average is 2.702 GHz, the deviation is 0.030 GHz, and Cp = 0.746 where Cp is the process capability given by Cp = (average - standard)/3/deviation. In the optical response band characteristic according to the present invention shown in FIG. 7, the average is 2.750 GHz, the deviation is 0.021 GHz, and Cp = 1.856. The condition of Cp = 1.33 or more is an ideal condition, and the above value of 1.856 for Cp according to the present invention falls in this range. According to the present invention, the average in the optical response band characteristic is increased and the deviation is decreased as compared with the prior art, thus obtaining a good characteristic.

In the mismatching attenuation (electric reflection characteristic) in the prior art shown in FIG. 8, the average is 17.8 dB, the deviation is 0.74 dB, and Cp = 1.27, whereas in the characteristic according to the present invention shown in FIG. 8, the average is 18.9 dB, the deviation is 0.87 dB, and Cp = 1.53. In comparison with the prior art, the average in the mismatching attenuation according to the present invention is increased, but the deviation is slightly larger. However, Cp is larger than 1.33, and an ideal condition is therefore obtained.

While each electrode is formed by cyan electroplating of Au in this preferred embodiment, each electrode may be formed by electroless plating of Cu, and the dummy electrode according to the present invention is effective also in this case. Further, each electrode may be formed by electroplating of Ag or Cu. The present invention is effective also in performing non-cyan plating using Au and sodium sulfite or Ag and sodium sulfite as a principal component.

According to the manufacturing method of the present invention, the distribution of the Au plating on the LN wafer can be reduced, so that the optical response band characteristic of the plural LN modulators formed on the wafer surface can be improved and the manufacturing yield can be improved. Further, the dummy electrode serves also as a bank, which can prevent an adhesive from flowing into the LN modulator chip product section.

Further, since the protective members abut against the dummy electrode in bonding, the protective members can be easily positioned and bonded, so that possible displacement of the protective members in bonding can be prevented. As a result, a highly reliable optical waveguide device can be provided with a good manufacturing yield.

The present invention is not limited to the details of the above described preferred embodiments.

## Claims

1. A manufacturing method for an optical waveguide device, comprising the steps of:
forming a plurality of optical waveguides in a wafer having an electro-optic effect;
forming a plurality of signal electrodes and a plurality of grounding electrodes on said wafer in relation to each of said optical waveguides;
forming a dummy electrode on said wafer so as to surround all of said signal electrodes and said grounding electrodes on said wafer simultaneously with formation of said signal electrodes and said grounding electrodes; and
dicing said wafer to separate individual optical waveguide devices.

2. The manufacturing method according to claim 1, further comprising the step of bonding a pair of protective members on said wafer outside of said dummy electrode in proximity thereto, before said dicing step.

3. The manufacturing method according to claim 2, wherein said protective members are in abutment against said dummy electrode.

4. The manufacturing method according to claim 1, wherein said dummy electrode is rectangular and has area enlarged portions at the four corners.

5. The manufacturing method according to claim 1, wherein said signal electrodes, said grounding electrodes, and said dummy electrode are formed by electroplating of a material selected from the group consisting of Au, Ag, and Cu.

6. The manufacturing method according to claim 1, wherein said signal electrodes, said grounding electrodes, and said dummy electrode are formed by electroless plating of Cu.

7. An optical waveguide device comprising:
a substrate having an electro-optic effect;
an optical waveguide formed in said substrate;
a signal electrode formed in relation to said optical waveguide;
a grounding electrode formed on said substrate; and
a pair of dummy electrodes formed near the opposite ends of said substrate so as to be spaced apart from said signal electrode and said grounding electrode.

8. The optical waveguide device according to claim 7, further comprising a pair of protective members bonded to said substrate so as to abut against said dummy electrode from the opposite ends of said substrate.

9. The optical waveguide device according to claim 7, wherein said substrate comprises an LiNbO₃ substrate, and said optical waveguide is formed by thermally diffusing Ti in said LiNbO₃ substrate.

10. An optical modulator comprising:
a substrate having an electro-optic effect;
an optical waveguide structure having an input waveguide formed in said substrate, an output waveguide formed in said substrate, and first and second waveguides extending between said input waveguide and said output waveguide, said first and second waveguides being connected to said input and output waveguides, respectively;
a first signal electrode formed over said first waveguide;
a second signal electrode formed over said second waveguide;
a grounding electrode formed on said substrate; and
a pair of dummy electrodes formed near the opposite ends-of said substrate so as to be spaced apart from said first and second signal electrodes and said grounding electrode.

11. The optical modulator according to claim 10, wherein said substrate comprises an LiNbO₃ substrate, and said optical waveguide is formed by thermally diffusing Ti in said LiNbO₃ substrate.
